# EUROPÄISCHE PATENTSCHRIFT

(11) **EP 2 254 815 B1**
(45) Veröffentlichungstag und Bekanntmachung des Hinweises auf die Patenterteilung: **20.07.2011**
(21) Anmeldenummer: 09710207.3
(22) Anmeldetag: 12.02.2009
(51) Int. Cl.: B65G 35/06, B65G 47/51

(54) **ZWISCHENSPEICHER FÜR STÜCKGUT**
INTERMEDIATE STORAGE FOR BULK GOODS
MAGASIN INTERMÉDIAIRE POUR DES MARCHANDISES DE DÉTAIL

(30) Priorität: 14.02.2008 CH 206082008
(43) Veröffentlichungstag der Anmeldung: 01.12.2010
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2009/051662
(87) Internationale Veröffentlichungsnummer: WO 2009/101152

(56) Entgegenhaltungen:
- DE-A1- 4 400 925
- US-A- 5 788 057
- US-A1- 2006 201 785

## Beschreibung

Die Erfindung betrifft einen nach dem First-in-first-out-Prinzip arbeitenden Zwischenspeicher gemäss dem Oberbegriff des unabhängigen Patentanspruchs 1.

### Beschreibung

Derartige Speicher werden vorzugsweise zwischen Produktion und Verpackung der Lebensmittel-Industrie, insbesondere bei der Herstellung von Schokoladetafeln, Schokoriegeln und Biscuits, eingesetzt. Ebenfalls nutzt man diese Speicher, um Verpackungsmaschinen kontinuierlich und lückenlos zu beschicken. Bei einem Unterbruch in der nachgeschalteten Verpackungsanlage kann weiterhin produziert werden, da der Speicher die anfallenden Produkte dann aufnehmen kann. Somit dient der Speicher der Prozessentkoppelung, weil er Unterbrüche überbrückt bzw. ausgleicht. Durch den Einsatz solcher Speicher kann die Effizienz einer Produktionslinie wesentlich gesteigert werden.

### Stand der Technik

Einen derartigen Speicher zeigt beispielsweise die deutsche Patentschrift DE 44 00 925 C2. Gemäss dieser bekannten Anlage werden die Produktereihen, von der Produktion kommend, mittels eines Beladebandes dem Einlauf des Speichers zugeführt. Dabei rutschen die Reihen im Taktbetrieb in die tafelförmigen Produkteträger der vom Speicher bereitgestellten Gondeln. Für den Transport dieser die Produktereihen tragenden Gondeln ist im Einlaufbereich des Speichers eine paarweise um Kettenräder umlaufende Kette angeordnet, die die Funktion eines Kreisförderers ausübt und die beladenen Gondeln taktweise weiterbefördert, wobei diese Weiterbeförderung je nach Bauart des Speichers nach oben oder nach unten gerichtet sein kann. Eine ähnliche Anordnung ist im Auslaufbereich des Speichers vorgesehen, sodass die Gondeln jeweils zunächst im Einlaufbereich ankommen, nach der Beladung nach oben befördert, von dort zu einer Warteposition, dem eigentlichen Speicher gelangen und dann, je nach Bedarf, der Ausgabestation zugeführt werden, um dann, nach der Entleerung, wieder zur Einlaufstation zurückzukehren. Jede Kette weist zur Mitnahme einer Gondel in festen Abständen angeordnete Mitnehmer auf. Der minimale Abstand zwischen aufeinanderfolgenden Mitnehmern wird wesentlich bestimmt durch die Abmessungen der Gondel sowie die Abmessungen der Kettenräder. Ist der Abstand zwischen den Mitnehmern zu klein gewählt, so kollidiert die über das Kettenrad geführte Gondel mit der nachfolgenden Gondel, da der Gondelabstand während der Bewegung über das Kettenrad reduziert wird.

Es ist insbesondere eine Aufgabe der vorliegenden Erfindung, den Abstand zwischen vertikal transporiteren, aufeinanderfolgenden Gondeln zu minimieren und gleichzeitig eine Kollision zwischen den Gondeln zu verhindern.

Ein weiterer, der vorliegenden Erfindung zugrunde liegender Aufgabenaspekt ist ferner darin zu sehen, dass die im Takt bewegten Gondeln beim Passieren der oberen Umlenkungen leicht ins Pendeln geraten und damit das meist leichtgewichtige Fördergut verrutscht oder gar aus der Gondel herausfällt.

Da ferner bei allen herkömmlichen Systemen die notwendige Mechanik der jeweils umlaufenden Kettenstränge links und rechts in jeweils voneinander unabhängigen Stahlkonstruktionen integriert sind, gibt es immer, insbesondere bei breiteren Systemen, von einem Kettenstrang zu dem anderen, ihm zugeordneten, zwangsläufige, aus den üblichen Fertigungs- und Montagetoleranzen resultierende Ungenauigkeiten (Verzug). Die Ketten der jeweils zusammenwirkenden Kettenpaare weisen bei bekannten Zwischenspeichern einen gemeinsamen Antrieb auf und können daher auch nur gemeinsam bewegt werden. Aufgrund dieser einseitig lokalisierten Antriebssituation ist ein mechanisch aufwändiger und kostenintensiver gemeinsamer Antrieb der beiden zusammenwirkenden Kettenpaare mittels Winkelgetrieben, Wellen und Kupplungen nicht zu vermeiden. Es ist eine weitere Aufgabe der vorliegenden Erfindung, diese Nachteile zu beheben.

Gemäss der vorliegenden Erfindung werden diese Ziele insbesondere durch die Elemente des unabhängigen Ansprüchs 1 erreicht. Weitere vorteilhafte Ausführungsformen gehen ausserdem aus den abhängigen Ansprüchen und der Beschreibung hervor.

Insbesondere werden die Ziele der Erfindung dadurch erreicht, dass der Zwischenspeicher zum Speichern von Stückgut eine Eingabestation und eine Ausgabestation umfasst, welche voneinander unabhängig betätigbar sind, dass eine zwischen der Eingabestation und der Ausgabestation angeordnete Speicherstrecke mit variabler Aufnahmekapazität angeordnet ist, dass Trägerplatten zur Aufnahme von Stückgut vorhanden sind, wobei die je einen Stapel bildenden Trägerplatten an Gondeln zusammengefasst sind, in einer Fördereinrichtung zum Transportieren der Trägerplatten in kreisartiger Bewegung durch den Zwischenspeicher, dass ein im Bereich der Eingabestation vorgesehener Eingabeelevator und einem im Bereich der Ausgabestation vorgesehener Ausgabeelevator zum Bilden bzw. Abarbeiten der in den Speicherstrecken angestauten Stapel vorhanden sind, mit je einem für die Eingabestation sowie die Ausgabestation vorgesehenen Vertikalförderer, die jeweils ein mit Mitnehmern für die Gondeln versehenes Kettenpaar umfassen, wobei jeder Vertikalförderer um ortsfeste Umlenkräder angeordnet ist. Dieser Zwischenspeicher umfasst eine Auslenkvorrichtung mit einem Antrieb und mit einer Schiebestange, wobei auf der Schiebestange ein beweglich gelagerter angetriebener Schlitten angeordnet ist, dass an einem Ende der Schiebestange ein Auslenkorgan beweglich gelagert ist, welches dazu bestimmt ist, nach Bedarf in ein an einem Aussenbereich der Gondel angeordnetes Schaltprofil einzugreifen, um die Gondel zwecks Kollisionsverhinderung mit der nachfolgenden Gondel in eine Schräglage zu versetzen. Dabei werden die Gondeln vorzugsweise nacheinander in einem Vertikalförderer des Zwischenspeichers transportiert, wobei mittels eines Auslenkorgans einer Auslenkvorrichtung des Zwischenspeichers in ein Schaltprofil der Gondel eingegriffen wird, wobei die Gondel an Mitnehmern der Ketten und an den Auslenkorganen drehbar gelagert ist, wobei das Auslenkorgan entlang einer Schiebestange der Auslenkvorrichtung vorzugsweise horizontal bewegt und die Gondel in eine Schräglage versetzt und mittels des Auslenkorgans eine Wegstrecke entlang der Schiebestange derart geführt ist, dass die Gondel kollisionsfrei an der nachfolgenden Gondel vorbeigeführt wird. Nach Zurücklegen der genannten Wegstrecke wird das Auslenkorgan aus dem Schaltprofil gelöst und zurückgefahren, um in das Schaltprofil der nachfolgenden Gondel eingeführt zu werden. Einer der Vorteile der Erfindung ist, dass der Abstand zwischen zwei sich aufeinanderfolgenden Gondeln möglichst klein gehalten werden kann, um den Abstand zwischen der letzten Produktereihe auf einer vorangehenden Gondel und der ersten Produktereihe auf der nachfolgenden Gondel minimal zu halten. Damit wird beim Beladen von Gondeln bei der Eingabestation bzw. beim Entladen von Gondeln bei der Ausgabestation erreicht, dass bei der vertikalen Förderung der Gondeln der sog. Gondelsprung klein gehalten werden kann oder gar entfällt. Das heisst, für den Sprung von einer Gondel zur nächsten muss der entsprechende Vertikalförderer kurzzeitig beschleunigt werden, da der Abstand der beiden aufeinanderfolgenden Tablare üblicherweise grösser ist als der Tablarabstand innerhalb einer Gondel. Durch das Reduzieren des Abstands zwischen zwei benachbarten Gondeln bzw. durch Verkürzen des Abstands zwischen den entsprechenden Mitnehmern auf den Förderketten kann dem Gondelsprung entgegengewirkt werden.

Die beschriebene Ausführung der Erfindung führt zu einer Beruhigung des Fördervorgangs beim Beladen bzw. Entladen von Produkten. Möglichen Schwingungen der Gondeln kann dadurch entgegengehalten werden. Die Taktrate beim Beladen bzw. Entladen kann zudem erhöht werden. Ein weiterer Vorteil der Erfindung ist, dass eine dynamische, sichere Führung der drehbar aufgehängten Gondeln im Bereich der oberen Kettenumlenkungen ermöglicht wird. Dadurch können die Gondel in vertikal stabiler Position, d.h. unter Vermeidung hemmender Schwingbewegungen, dem oberen Stauförderer übergeben werden. Die unerwünschte Schwingbewegung wird dadurch mit Sicherheit verhindert und infolgedessen kann nun auch der Abstand benachbarter Gondeln, bzw. die Nockenteilung auf den umlaufenden Ketten, ebenso wie der Durchmesser der Kettenumlenkung, minimalisiert werden. Dies bringt Geschwindigkeits- und Platzvorteile gegenüber bekannten Systemen, wo ein Schwingen der Gondeln berücksichtigt werden muss und - falls dasselbe sich nicht beheben lässt - erhebliche negative Auswirkungen mit sich bringt.

Dank dem erfindungsgemässen Speicher ist es nun auch möglich, die Gondel, während sie die obere Kettenumlenkung passiert, in einer beliebig wählbaren, abgewinkelten Position zu führen, um eine Kollisionen mit einer benachbarten Gondeln verhindern zu können. Es ist zudem ein weiterer Vorteil der Erfindung, dass sichergestellt werden kann, dass mittels der zueinander synchronisierbaren, unabhängig angetriebenen Ketten eines Vertikalförderers die Auslenkung einer Gondel zwecks Kollisionsverhinderung, winkelgenau über die jeweiligen Umlenkräder bzw. Kettenräder führbar sind.

In einer Ausführungsvariante des Zwischenspeichers werden die Ziele der Erfindung dadurch erreicht, dass die Schiebestange als einachsiger Linearantrieb realisiert ist, wobei das Auslenkorgan entlang des Hebelweges des Linearantriebs führbar ist. Einer der Vorteile der Erfindung ist dabei, dass mittels des Linearantriebs eine flexible Vorrichtung realisiert ist, so dass bspw. Gondeln mit geringer oder mit grosser Zahl von Tablaren zur Aufnahme von Produkten bzw. Produktreihen verwendet werden können und auslenkbar sind.

In einer anderen Ausführungsvariante des Zwischenspeichers werden die Ziele der Erfindung dadurch erreicht, dass jedes Kettenpaar der beiden Vertikalförderer jeweils zwei parallel laufende Ketten aufweist und jede Einzelkette einen separaten, mechanisch unabhängigen Antrieb aufweist, dass die Förderbewegung der jeweils innerhalb eines Kettenpaars zusammenwirkenden Ketten synchron geregelt ist und dass der Zwischenspeicher eine Regeleinrichtung zum Erfassen von Niveauunterschieden zwischen der zu beladenden bzw. zu entladenden Trägerplatte und der Übergabekante des Einschub- bzw. Ausschubförderers und zum entsprechenden Regeln der Antriebe der Einzelketten umfasst.

Einer der Vorteile der Erfindung ist hierbei, dass der mechanisch aufwändige Übertrieb von einem Kettenstrang zum anderen mittels Winkelgetrieben, Wellen und Kupplungen entfällt. Da das auftretende Drehmoment bei der vorgeschlagenen Anordnung von zwei Antriebseinheiten zu gleichen Teilen aufgenommen wird, kann man somit auch bei der Dimensionierung der Getriebe und Motoren gegenüber herkömmlichen Systemen mit einem Antrieb nur halb so grosse, bzw. halb so teure Antriebseinheiten verwenden. Bei allen herkömmlichen Systemen ist die notwendige Mechanik der jeweils umlaufenden Kettenstränge links und rechts in jeweils voneinander unabhängigen Stahlkonstruktionen integriert; es gibt daher immer, insbesondere bei breiteren Systemen zwangsläufig Ungenauigkeiten (Verzug) von der einen zur anderen Seite. Diese Ungenauigkeiten resultieren aus üblichen Fertigungs- und Montagetoleranzen. Durch die erfindungsgemässe Anordnung ist es nun möglich, die jeweilige Gondel am Einlauf bzw. Auslauf des Speichers auf die jeweils geforderte Einschub- bzw. Ausschubebene absolut horizontal einzustellen, weil jede Seite unabhängig von der anderen beliebig genau nivelliert werden kann. Somit ist es möglich, die Nockenpaare so zueinander einzustellen, dass die Gondeln reproduzierbar fluchtend bezüglich der Einschub- bzw. Ausschubebene positioniert sind. Insbesondere bei sehr flachen Produkten, wie dies bei den erwähnten Süsswaren der Fall ist, muss deren Ausschub mit absoluter Genauigkeit erfolgen. Bei der beschriebenen Ausführungsvariante der Erfindung entfällt somit der bereits erwähnte aufwändige und kostenintensive, den linken mit dem rechten Kettenstrang verbindende Antrieb. Da ferner nach der erfindungsgemässen Lösung das auftretende Drehmoment von zwei Antriebseinheiten zu gleichen Teilen aufgenommen wird, kann man somit auch bei der Dimensionierung der Getriebe und Servomotoren gegenüber herkömmlichen, mit einem Antrieb versehenen Systemen nur halb so grosse bzw. erheblich preisgünstigere Antriebseinheiten verwenden.

In einer weiteren Ausführungsvariante des Zwischenspeichers werden die Ziele der Erfindung dadurch erreicht, dass der Zwischenspeicher Signalgeber und/oder Signalnehmer zum Erfassen von Niveau-Unterschieden zwischen der zu beladenden bzw. zu entladenden Trägerplatte und der Übergabekante des Einschub- bzw. Ausschubförderers umfasst, wobei die Signalgeber und/oder Signalnehmer vorzugsweise als Hall-Sensoren und/oder magnetoresistive Sensoren und/oder Lichtschranken im Bereich der Einschub- bzw. Ausschubebene realisiert sind. Einer der Vorteile der Erfindung ist, dass durch die erfindungsgemässe Anordnung ermöglicht wird, dass die jeweilige am Einlauf zu beladende bzw. Auslauf des Speichers zu entladende Gondel auf die jeweils geforderte Einschub- bzw. Ausschubebene reproduzierbar fluchtend bezüglich der Einschub- bzw. Ausschubebene positionierbar ist.

Die Erfindung betrifft ferner ein Verfahren zur Kollisionsverhinderung von Gondeln eines Zwischenspeichers, wobei die Gondeln nacheinander in einem Vertikalförderer des Zwischenspeichers transportiert werden.

Gemäss diesem erfindungsgemässen Verfahren wird mittels eines Auslenkorgans des Zwischenspeichers in ein Schaltprofil der Gondel eingegriffen, wobei die Gondel an Mitnehmern der Ketten drehbar gelagert ist. Das Auslenkorgan wird hierbei entlang einer Schiebestange der Auslenkvorrichtung vorzugsweise horizontal bewegt und die Gondel dadurch in eine Schräglage versetzt. Nach Zurücklegen einer Wegstrecke wird das Auslenkorgan aus dem Schaltprofil gelöst und zurückgefahren, um in das Schaltprofil der nachfolgenden Gondel eingeführt zu werden.

Nachstehend werden anhand der beiliegenden Zeichnung einige Ausführunsgsbeispiele des erfindungsgemässsen Zwischenspeichers beschrieben. Es zeigen:
Fig. 1 eine schematische Darstellung der Funktionsweise einer Ausführungsform des erfindungsgemässen Zwischenspeichers,
Fig. 2 eine ähnliche Darstellung in einer um 90 Grad gedrehten Lage,

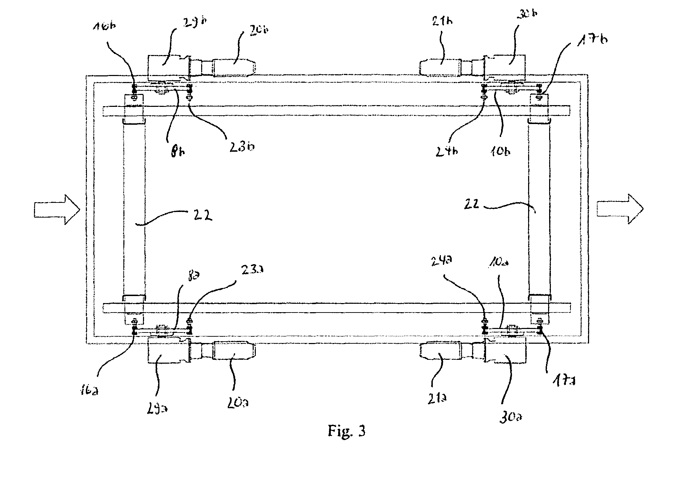

Fig. 3 eine entsprechende Draufsicht,
Fig. 4 als Detail der Draufsicht eine schematische Darstellung einer Auslenkvorrichtung
Fig. 5 ein Detail von Fig. 4,
Fig. 6 eine ähnliche Darstellung von Fig. 4 in einer um 90 Grad gedrehten Lage,
Fig. 7 eine schematische Darstellung der Gondeln kurz vor dem Passieren der oberen Umlenkstrecke in einer Seitenansicht der Ausgabestation,
Fig. 8 die gleichen Gondeln in einer weiteren Betriebsphase, nachdem der Vertikalförderer eine kurze Wegstrecke zurückgelegt hat,
Fig. 9 die gleichen Gondeln, nachdem die die Umlenkstrecke passierende Gondel mit Rücksicht auf die nachfolgende Gondel ausgelenkt wurde,
Fig. 10 eine schematische Darstellung einer Gondel mit entsprechender Sensorik zur Erfassung der Niveaudifferenz zwischen einer an der Eingabe- bzw. Ausgabestation angeordneten Übergabekante und einer dieser benachbarten Trägerplatte, und
Fig. 11 eine ähnliche Darstellung in einer um 90 Grad gedrehten Lage.

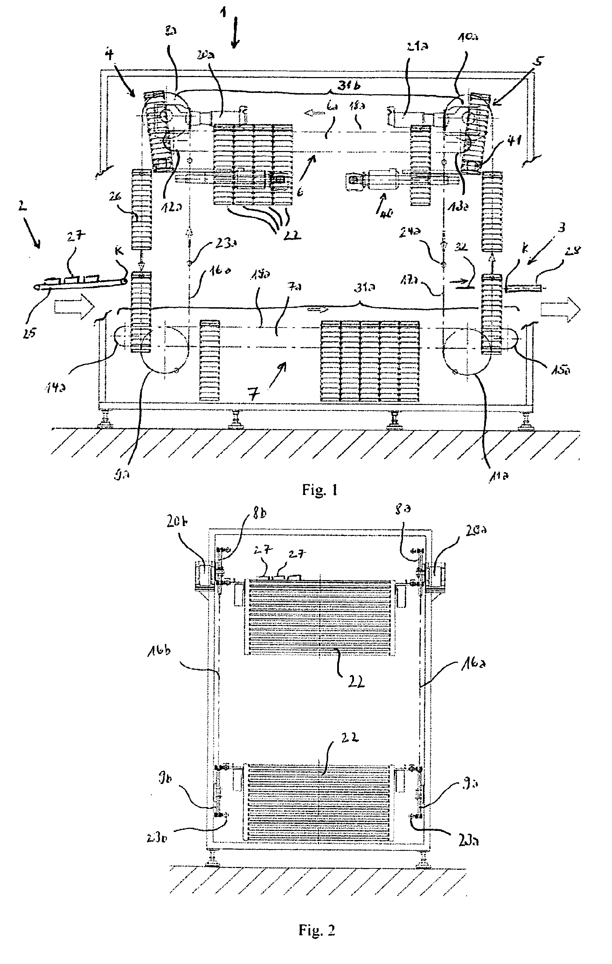

Fig. 1 illustriert eine Vorrichtung, die zur Realisierung des erfindungsgemässen Zwischenspeichers verwendet kann. Der in seiner Gesamtheit mit 1 bezeichnete, nach dem First-in-first-out-Prinzip arbeitende Zwischenspeicher weist eine Eingabestation 2 und eine Ausgabestation 3 auf. An der Eingabestation werden die auf einem Eingabeförderer 25 angelieferten Stückgüter 27, beispielsweise Schokoladetofeln, den Trägerplatten oder Tablaren 26 einer im Takt des Eingabeförderers 25 nach unten bewegten Gondel 22 zugeführt. Dabei ist es von Bedeutung, dass die Aufnahmefläche der gerade zu beladenden Trägerplatte 26 möglichst präzise auf der Höhe der Übergabekante K des Eingabeförderers 25 liegt. Die Stückgutreihen 27 rutschen dann problemlos auf die bereitstehenden Trägerplatten.

Die von einem Vertikalförderer 4 von oben nach unten bewegten Gondeln 22 hängen an einer paarweise umlaufenden Kette 16a,16b, d.h. es sind zwei in regelmässiger Teilung mit Mitnehmern bzw. Mitnehmernocken 23a,23b versehene Ketten 16a,16b um Kettenräder 8a,8b geführt und jeweils durch einen Antrieb 20a,20b angetrieben. Jede einzelne Kette 16a,16b des Vertikalantriebs 4 ist mit einem separaten Antrieb 20a,20b ausgestattet und kann somit auch über ihren Antrieb individuell gesteuert werden.

Der praktisch identisch aufgebaute zweite Vertikalförderer 5 bewegt die an der Ausgabestation 3 entladenen Gondeln mittels zweier Förderketten 17a,17b und Mitnehmernocken 24a,24b nach oben in die obere Staustrecke 31 b.

Die Mitnehmernocken 23a,23b;24a,24b sind jeweils fluchtend zueinander angeordnet, so dass sich jede Gondel in jedem Zeitpunkt ihrer Förderbewegung in möglichst horizontaler Position befindet. Dank ihrer Aufhängung an den Mitnehmernocken 23,24 sind die Gondeln 22 beidseitig um die Mitnehmernocken drehbar und somit vorzugsweise vertikal hängend gelagert.

Wie insbesondere Fig. 1 zeigt, wandern die an der Eingabestation beladenen Gondeln 22 zunächst im Takt nach unten und werden dort an den unteren Staubereich 31a übergeben. Nach ihrer Ankunft im Staubereich 31a werden die Gondeln zunächst mit konstanter Geschwindigkeit in Richtung Auslauf einzeln weiterbefördert, wo sie auf Stau auflaufen. Dieser Staubereich 31 a weist ebenfalls zwei parallele Förderketten 19a,19b auf, die ihrerseits um Kettenräder 14a,14b und 15a,15b geführt sind. Der so gebildete, in seiner Gesamtheit mit 7 bezeichnete Horizontalförderer übernimmt nun die vom Vertikalförderer 4 angelieferten Gondeln 22; hierbei unterlaufen die Mitnehmernocken 23 der Ketten 16a,16b die Förderebene des Staubereichs 31 a und befreien sich dabei von der Mitnahmefunktion der Ketten 16a,16b. Nun hängen die gefüllten Gondeln 22 an den über die Kettenräder 14a,14b angetriebenen Ketten 19a,19b und können aus diesem Staubereich 31 a nach Bedarf abgerufen werden.

Am Ende dieses Staubereichs 31 a werden die Gondeln 22 von einem Vertikalförderer 5 übernommen und von diesem taktweise nach oben bewegt. Auch der Vertikalförderer 5 weist zwei mit separaten Antrieben 21a,21b versehene Förderketten 17a,17b auf, die ebenfalls mit zueinander fluchtenden Mitnehmernocken 24a/24b versehen sind. Auf diesen in regelmässiger Teilung an den Ketten 17a,17b befindlichen Nockenpaaren 24a,24b werden die Gondeln 22 nun aus der unteren Stauzone 31 a abgehoben, um anschliessend im Arbeitstakt auf das Niveau der Übergabekante K des Ausschiebers 32 bewegt zu werden. Der Ausschub kann dabei entweder frontal, d.h. in der durch Pfeil angedeuteten Bewegungsrichtung des Schiebers 32 erfolgen, und/oder in einer unteren, nicht dargestellten, lateralen Ausschubebene, wobei jede Ausschubebene eine unabhängige Verpackungslinie bedienen kann.

Durch das umlaufende Kettenpaar 17a,17b werden die entleerten Gondeln 22 nun im Arbeitstakt nach oben bewegt und erreichen dort über die oberen Kettenräder 10a,10b den oberen Staubereich 31 b. Dies bedeutet, dass die an den Mitnehmernocken 24a,24b hängenden Gondeln über die oberen Kettenräder 10a,10b umgelenkt und anschliessend auf die Förderebene des Staubereichs 31b abgesenkt werden. Ein ebenfalls zwei Ketten 18a,18b aufweisender Horizontalförderer 6 bringt die leeren Gondeln 22 dann zum Vertikalförderer 4, worauf die Gondeln von den Mitnehmernocken 23 erfasst werden und nach dem Passieren der die Umlenkung bewirkenden Kettenräder 8a,8b von den Ketten 16a,16b des Vertikalförderers 4 erfasst werden, um erneut zur Eingabestation 2 zu gelangen.

Ein wesentliches Merkmal des beschriebenen Zwischenspeichers ist, wie bereits erwähnt, die Tatsache, dass die Vertikalstrecken des Förderkreises jeweils zwei zusammenwirkende, separat angetriebene und auch separat steuerbare, jeweils einen Kreisförderer bildende Ketten 16 und 17 aufweisen. Die dazugehörigen Antriebe 20a,20b und 21 a,21 b sind in jedem Fall unabhängige Einzelantriebe, vorzugsweise als Getriebemotoren ausgebildet. Somit ist jede der vier umlaufenden Ketten der Vertikalförderer 4 und 5 mit einer separaten Antriebseinheit versehen.

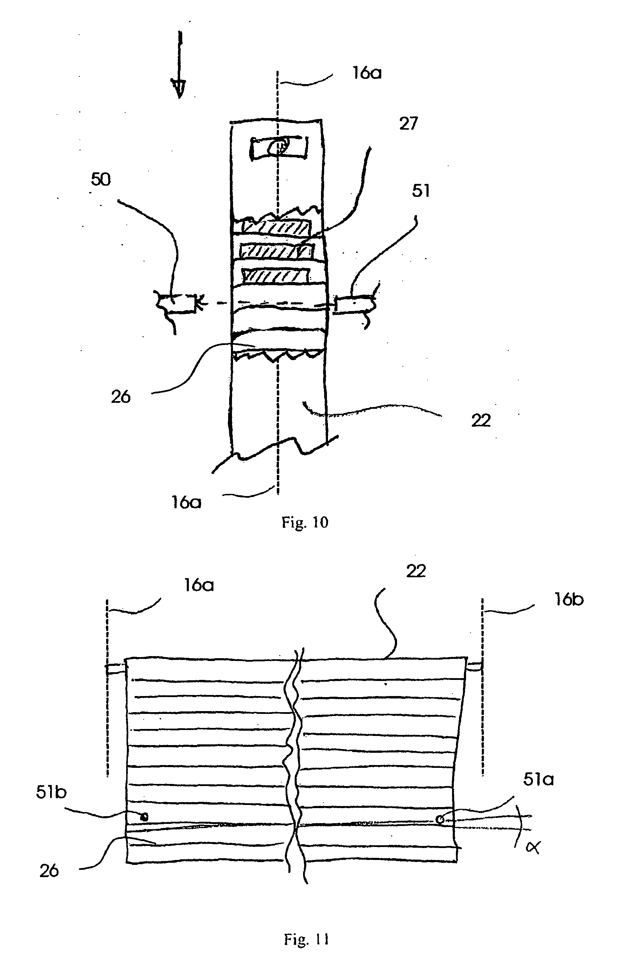

Die erforderliche Synchronizität der jeweils ein Kettenpaar bildenden Ketten kann steuerungstechnisch folgendermassen gelöst werden: Die schematisch vereinfachte Darstellung der Figuren 10 und 11 zeigt Sensorikmodule 50 und 51, mittels welchen die eventuellen Niveauunterschiede zwischen einer Trägerplatte 26 und der in Figur 1 dargestellten Übergabekante K (Fig. 1) des Förderers 25 an der Eingabestation 2 ermittelt werden können. Der in Fig. 11 angedeutete Winkel α ist hierbei ein Mass für den Niveauunterschied bzw. Neigungswinkel der Gondel. Im Idealfall ist dieser Winkel gleich Null, so dass der Förderer 25 das auf ihm angelieferte Stückgut mit reproduzierbarer Präzision über die Übergabekante K auf die ihm benachbarte Trägerplatte 26 der Gondel ausschiebt bzw. bei einer gleichen Vorrichtung bei der Eingabestation das Stückgut 27 vom Förderer 25 auf die entsprechende Trägerplatte 26 abgesetzt wird. Auf der Ausgabeseite 3 ist einerseits die Übergabekante K exakt auf das Niveau der zu entladenden Trägerplatte 26 gerichtet, während gleichzeitig das Niveau der letzteren auf die Förderebene des Austrageförderers 28 ausgerichtet sein muss.

Damit wird erreicht, dass das Stückgut, beispielsweise Gebäck, bruchfrei auf den Förderer 28 verschoben werden kann. Der durch die Sensorikmodule 50 und 51 ermittelte Differenzwert wird auf die Antriebe 20a,20b;21a,21b, der Einzelketten 16a,16b und 17a,17b übertragen, so dass die erforderliche Niveauanpassung sofort nach deren Ermittlung erfolgt. Die Nieveauregulierung kann für jede einzelne Trägerplatte 26 separat erfolgen. Die Signalgeber bzw. Signalnehmer können als Hall-Sensoren und/oder magnetoresistive Sensoren und/oder als Lichtschranken ausgebildet sein.

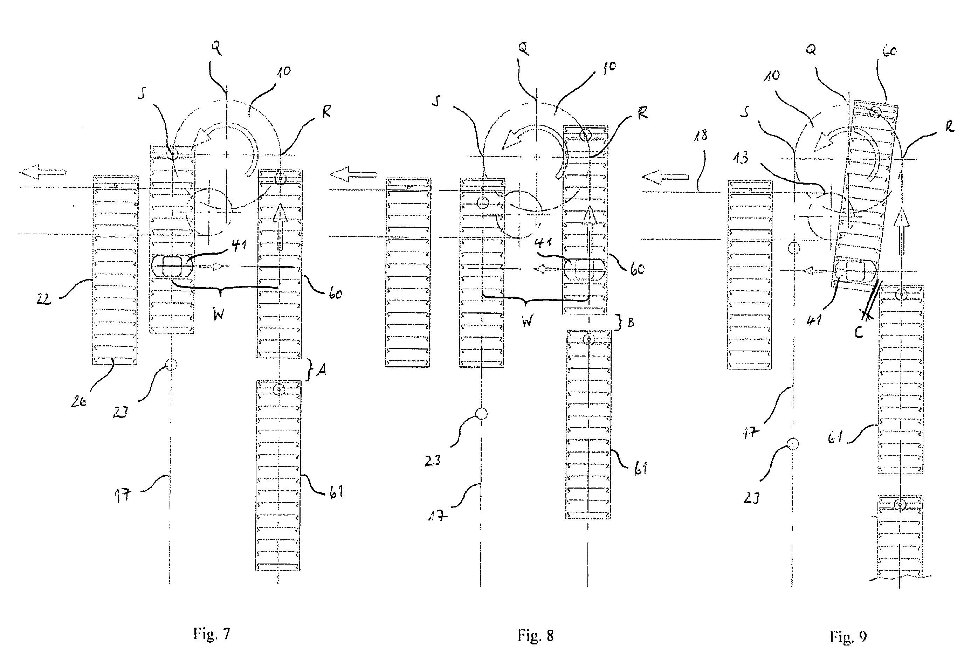

Fig. 7 zeigt ein oben liegendes Kettenrad 10 eines Vertikalförderers des erfindungsgemässen Zwischenspeichers. Dabei zeigt Fig. 7 die Ausgangsposition zweier aufeinander folgender Gondeln 60 bzw. 61, welche durch den Vertikalförderer 5 (Fig. 1) vertikal nach oben transportiert werden. Dabei ist der Abstand A zwischen den Gondeln 60 bzw. 61 vorzugsweise minimal gehalten. Fig. 8 zeigt u.a. die Gondel 60 bzw. 61, wobei diese durch den Vertikalförderer 5 entlang den Ketten 17a,17b an Mitnehmern 23 eine kurze Wegstrecke weiter transportiert worden sind. Die Gondel 60 hat dabei den Aufrollpunkt R des Kettenrades 10 durchfahren und liegt auf dem Kettenrad auf. Die bisherige Distanz A zwischen der Unterkante der Gondel 60 und der Oberkante der nachfoldenden Gondel 61 wurde dadurch reduziert auf die Distanz B.

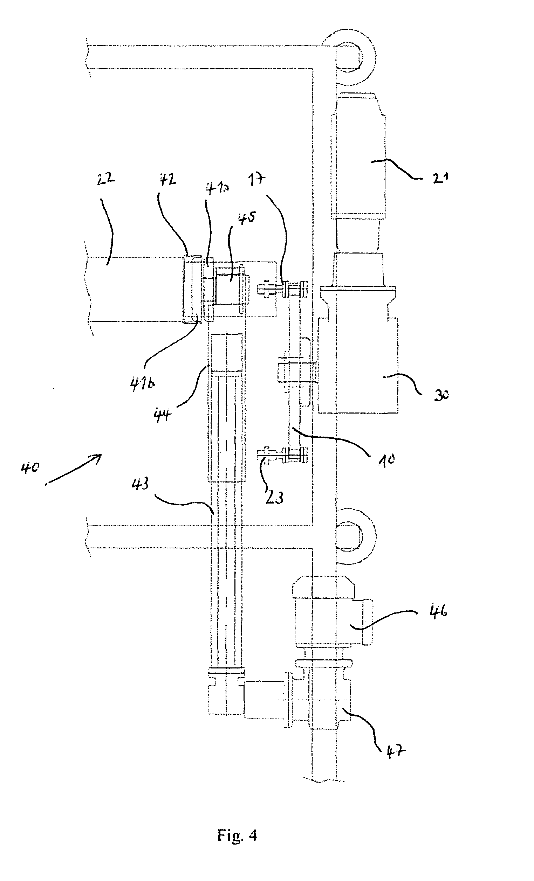

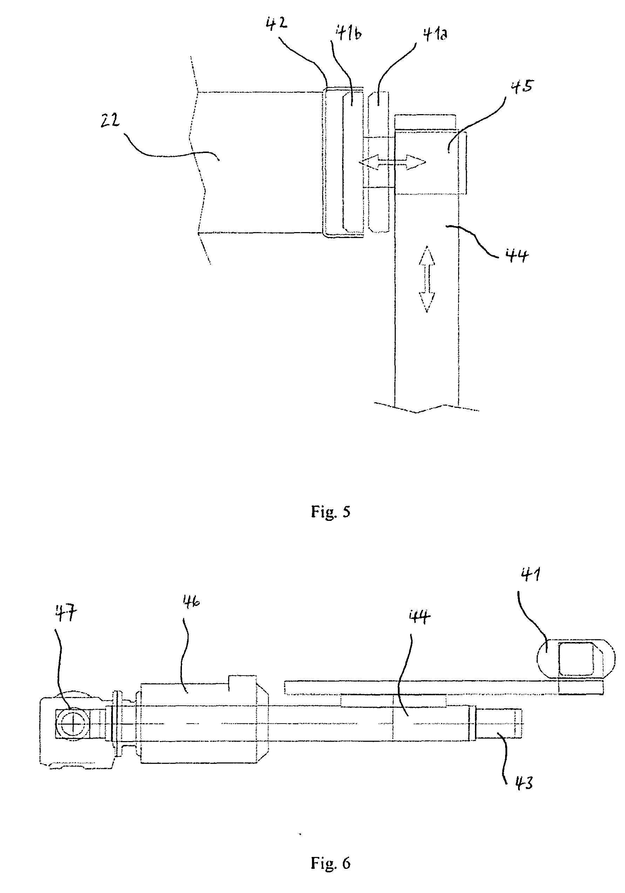

Die Gondel 60 muss nun gegenüber der Gondel 61 horizontal versetzt werden. Um dabei eine Kollision zwischen den Gondeln 60 und 61, welche nacheinander in den Vertikalförderern 4,5 des Zwischenspeichers 1 transportiert werden, zu verhindern, muss die vorangehende Gondel in eine Schräglage versetzt werden. Dazu greift gemäss Fig. 4 bis 6 das Auslenkorgan 41 einer Auslenkvorrichtung 40 des Zwischenspeichers 1 in den U-förmigen Querschnitt eines Schaltprofils 42 der Gondel ein. Das an der Gondel 22 angeordnete U-förmige Schaltprofil 42 dient zur vorübergehenden Aufnahme des Auslenkorgans 41, das bei seiner Bewegung im Schaltprofil 42 gleitet und die Gondel dabei seitlich verschiebt, d.h. aus ihrer Vertikallage (Fig. 7) in die Schräglage nach Fig. 9 bringt. Das am Vorderteil eines Schlittens 44 (Fig. 5) drehbar gelagerte Auslenkorgan 41 dringt somit beim Eintritt der Gondel 22 in die Umlenkkurve (Fig. 7) in das an der Gondel-Längsseite ortsfest angebrachte U-förmige Schaltprofil 42 und begleitet dieses somit auf seiner Umlenkbahn bis auf die gegenüberliegende Seite derselben. Die eigentliche Auslenkung wird dabei durch einen mit Getriebe 47 versehenen Antriebsmotor 46 bewirkt, dessen Bewegung über Schiebehebel 43, Schlitten 44 und Hubzylinder 45 auf das Auslenkorgan 41 übertragen wird. Die an Mitnehmern 23,24 der Ketten 16a, 16b;17a,17b drehbar gelagerte Gondel 60 wird somit durch die Auslenkorgane 41 geführt, solange sie sich im Bereich der Umlenkstrecke befindet. Vorzugsweise verbleiben die beidseitig der Gondel 60 eingeführten Auslenkorgane im jeweiligen Schaltprofil 42 eingeführt, bis die Gondel 60 den Abrollpunkts S erreicht hat, wo alsdann das Auslenkorgan 41 aus dem Schaltprofil 42 herausgeführt bzw. gelöst wird. Würde das Auslenkorgan 41 aus dem Schaltprofil 42 gelöst, während die Gondel 60 noch über die Kettenräder geführt würde, so könnte die Gondel zu schwingen bzw. zu schaukeln beginnen. Das Auslenkorgan 41 wird entlang der Schiebestange 43 der Auslenkvorrichtung 40 vorzugsweise horizontal bewegt, wobei die Gondel 60 derart in eine Schräglage versetzt wird, dass die in Fig. 9 mit C bezeichnete Distanz gross genug ist, um die Gondel 60 an der Gondel 61 kollisionsfrei vorbeizuführen. Gleichzeitig wird mit dem Schrägstellen erreicht, dass die Gondel 60 stabil und schwingunsfrei über die Kettenräder geführt wird.

Das Auslenkorgan 41, dessen Umrisse dem Schaltprofil etwa angepasst sind, ist einerseits längsverschieblich am Schlitten 44 gelagert und mit einem Antrieb 46,47 gekoppelt, während es sich ferner durch den Hubzylinder 45 in das Schaltprofil 42 einfahren bzw. - nach Umfahrung der Umlenkstrecke - wieder aus demselben herausbewegen lässt. Beim Passieren der durch das Umlenkrad vorgegebenen Umlenkstrecke wird die Gondel somit zunächst aus ihrer anfänglichen Vertikallage ausgelenkt, um dem Vorderabschnitt der ihr nachfolgenden Gondel Platz zu machen; sobald die Gondel das Umlenkrad zum Grossteil passiert hat, zieht sich das Umlenkorgan 41 kontinuierlich aus dem Schaltprofil zurück, wodurch die Gondel wieder ihre Vertikallage einnehmen kann. Dank dieser vorübergehenden Auslenkung der Gondeln kann der gegenseitige Gondelabstand sehr klein gehalten werden.

Bei der Umlenkung legt das an der Schiebestange 43 längsverschieblich gelagerte Auslenkorgan 41 vorzugsweise eine Wegstrecke W entlang der Schiebestange 43 zurück. Sobald die Gondel 60 den Abrollpunkt S erreicht hat, kann das Auslenkorgan 41 aus dem Schaltprofil 42 herausgeführt bzw. gelöst werden. Über den mit einem Antrieb 47 versehenen und an der Schiebestange 43 gehaltenen Schlitten 44 wird das Auslenkorgan 41 zurückgefahren, um in das Schaltprofil 42 der nachfolgenden Gondel 51 eingeführt zu werden. Das für die Ausgabestation 3 vorgeschlagene Auslenkorgan 41 ist entsprechend für die Eingabestation 2 verwendbar. Dabei kann die mögliche Kollision zwischen einer über das Kettenrad des Vertikalförderers 8 geführten Gondel mit der vorangehenden, vertikal nach unten transportierten Gondel verhindert werden.

### Bezugszeichenliste

- 1: Zwischenspeicher
- 2: Eingabestation
- 3: Ausgabestation
- 4: Vertikalförderer
- 5: Vertikalförderer
- 6: Horizontalförderer
- 7: Horizontalförderer
- 8: Kettenrad
- 9: Kettenrad
- 10: Kettenrad
- 11: Kettenrad
- 12: Kettenrad
- 13: Kettenrad
- 14: Kettenrad
- 15: Kettenrad
- 16: Kette
- 17: Kette
- 18: Kette
- 19: Kette
- 20: Antrieb
- 21: Antrieb
- 22: Gondel
- 23: Mitnehmer, Mitnehmernocken
- 24: Mitnehmer, Mitnehmernocken
- 25: Förderer
- 26: Trägerplatte
- 27: Stückgut
- 28: Förderer
- 29: Getriebe
- 30: Getriebe
- 31: Speicherstrecke
- 32: Schieber
- 40: Auslenkvorrichtung
- 41: Betätigungseinrichtung
- 42: Schaltprofil
- 43: Schiebestange
- 44: Schlitten
- 45: Hubstange
- 46: Antrieb
- 47: Getriebe
- 50: Sensorik
- 51: Sensorik
- 60: Gondel
- 61: Gondel
- A: Abstand
- B: Abstand
- C: Abstand
- K: Kante
- Q: Scheitelpunkt
- R: Aufrollpunkt
- S: Abrollpunkt
- α: Winkel

## Patentansprüche

1. Zwischenspeicher (1) zum Speichern von Stückgut (27) mit einer Eingabestation (2) und einer Ausgabestation (3), welche voneinander unabhängig betätigbar sind, mit einer zwischen der Eingabestation (2) und der Ausgabestation (3) angeordneten Speicherstrecke (31) mit variabler Aufnahmekapazität, mit Trägerplatten (26) zur Aufnahme von Stückgut (27), wobei die je einen Stapel bildenden Trägerplatten (26) an Gondeln (22) zusammengefasst sind und mit einer Fördereinrichtung zum Transportieren der Trägerplatten in kreisartiger Bewegung durch den Zwischenspeicher (1), mit einem im Bereich der Eingabestation (2) vorgesehenen Eingabeelevator und einem im Bereich der Ausgabestation vorgesehenen Ausgabeelevator zum Bilden bzw. Abarbeiten der in den Speicherstrecken (31a,31b) angestauten Stapel, mit je einem für die Eingabestation sowie die Ausgabestation vorgesehenen Vertikalförderer (4,5), die jeweils ein mit Mitnehmern (23,24) für die Gondeln (22) versehenes Kettenpaar umfassen, wobei jeder Vertikalförderer (4,5) um ortsfeste Umlenkräder (8a,9a, 8b,9b; 10a,11a,10b,11b) angeordnet ist, **dadurch gekennzeichnet,**
**dass** der Zwischenspeicher (1) eine Auslenkvorrichtung (40) mit einem Antrieb (46) und mit einer Schiebestange (43) umfasst, wobei auf der Schiebestange (43) ein beweglich gelagerter angetriebener Schlitten (44) angeordnet ist und
**dass** an einem Ende der Schiebestange (43) ein Auslenkorgan (41) beweglich gelagert ist, welches dazu bestimmt ist, nach Bedarf in ein an einem Aussenbereich der Gondel (22) angeordnetes Schaltprofil (42) einzugreifen, um die Gondel (22) zwecks Kollisionsverhinderung mit der nachfolgenden Gondel in eine Schräglage zu versetzen.

2. Zwischenspeicher (1) gemäss Anspruch 1, **dadurch gekennzeichnet,**
**dass** die Schiebestange (43) als einachsiger Linearantrieb realisiert ist, wobei das Auslenkorgan (41) entlang des Hebelweges des Linearantriebs führbar ist.

3. Zwischenspeicher (1) gemäss einem der Ansprüche 1 und 2, **dadurch gekennzeichnet,**
**dass** jedes Kettenpaar (16a, 16b, 17a, 17b) der beiden Vertikalförderer (4,5) jeweils zwei parallel laufende Ketten aufweist und jede Einzelkette (16a,16,17a,17b) einen separaten, mechanisch unabhängigen Antrieb (20a,20b,21a,21b) aufweist,
**dass** die Förderbewegung der jeweils innerhalb eines Kettenpaars zusammenwirkenden Ketten synchron geregelt ist und
**dass** der Zwischenspeicher (1) eine Regeleinrichtung zum Erfassen von Niveauunterschieden zwischen der zu beladenden bzw. zu entladenden Trägerplatte (26) und der Übergabekante des Einschub- bzw. Ausschubförderers (25,32) und zum entsprechenden Regeln der Antriebe (20a,20b,21 a,21 b) der Einzelketten (16a,16b,17a,17b) umfasst.

4. Zwischenspeicher (1) gemäss einem der Ansprüche 1 bis 3, **dadurch gekennzeichnet,**
**dass** der Zwischenspeicher (1) Signalgeber und/oder Signalnehmer (50,51) zum Erfassen von Niveau-Unterschieden zwischen der zu beladenden bzw. zu entladenden Trägerplatte (26) und der Übergabekante (K) des Einschub- bzw. Ausschubförderers (25 bzw. 28,32) umfasst, wobei die Signalgeber und/oder Signalnehmer (50,51) vorzugsweise als Hall-Sensoren und/oder magnetoresistive Sensoren und/oder Lichtschranken im Bereich der Einschub- bzw. Ausschubebene (25,28) realisiert sind.

5. Verfahren zur Kollisionsverhinderung von Gondeln eines Zwischenspeichers (1) gemäss einem der Ansprüche 1 bis 4, wobei die Gondeln nacheinander in einem Vertikalförderer des Zwischenspeichers (1) transportiert werden, **dadurch gekennzeichnet,**
**dass** mittels eines Auslenkorgans (41) einer Auslenkvorrichtung (40) des Zwischenspeichers in ein Schaltprofil (42) der Gondel (60) eingegriffen wird, wobei die Gondel (60) an Mitnehmern der Ketten und an den Auslenkorganen (41) drehbar gelagert ist,
**dass** das Auslenkorgan (41) entlang einer Schiebestange (43) der Auslenkvorrichtung (40) vorzugsweise horizontal bewegt wird, wobei die Gondel (60) in eine Schräglage versetzt wird,
**dass** die Gondel (60) mittels des Auslenkorgans (41) eine Wegstrecke (W) entlang der Schiebestange (43) derart geführt ist, dass die Gondel (60) kollisionsfrei an der nachfolgenden Gondel (61) vorbeigeführt wird,
**dass** nach Zurücklegen der genannten Wegstrecke (W) das Auslenkorgan (41) aus dem Schaltprofil (42) gelöst und zurückgefahren wird, um in das Schaltprofil (42) der nachfolgenden Gondel (61) eingeführt zu werden.

## Claims

1. An intermediate storage (1) for storing bulk goods (27), with an input station (2) and an output station (3) which can be actuated independently of each other, with a storage section (31) which has variable receiving capacity and is arranged between the input station (2) and the output station (3), with support plates (26) for receiving bulk goods (27), wherein the support plates (26) which form in each case one stack are pooled on gondolas (22), and with a conveyor system for transporting the support plates in a circle-like movement through the intermediate storage (1), with an input elevator provided in the region of the input station (2) and an output elevator provided in the region of the output station for forming or processing, respectively, the stacks stored in the storage sections (31a, 31b), with in each case one vertical conveyor (4, 5) provided for the input station and the output station, each of the vertical conveyors comprising one pair of chains provided with towing arms (23, 24) for the gondolas (22), wherein each vertical conveyor (4, 5) is arranged about stationary deflection wheels (8a, 9a, 8b, 9b; 10a, 11a, 10b, 11b), **characterized in**
**that** the intermediate storage (1) comprises a deflection device (40) with a drive (46) and with a push rod (43), wherein on the push rod (43), a movably mounted, driven slide (44) is arranged, and
**that** at one end of the push rod (43), a deflection organ (41) is movably mounted which is intended to engage on demand with a shift profile (42) arranged on an outer region of the gondola (22) so as to put the gondola in an oblique position in order to prevent a collision with the following gondola.

2. The intermediate storage (1) according to claim 1, **characterized in**
**that** the push rod (43) is implemented as single-axis linear drive, wherein the deflection organ (41) can be guided along the lever path of the linear drive.

3. The intermediate storage according to any one of the claims 1 and 2, **characterized in**
**that** each chain pair (16a, 16b, 17a, 17b) of the two vertical conveyors (4, 5) has in each case two parallelly running chains and each individual chain (16a, 16, 17a, 17b) has a separate, mechanically independent drive (20a, 20b, 21a, 21b),
**that** the conveying movement of the chains interacting in each case within a chain pair is controlled synchronously, and
**that** the intermediate storage (1) comprises a control unit for detecting level differences between the support plate (26) to be loaded or unloaded and the transfer edge of the infeed conveyor or outfeed conveyor (25, 32), and for adequately controlling the drives (20a, 20b, 21a, 21b) of the individual chains (16a, 16b, 17a, 17b).

4. The intermediate storage (1) according to any one of the claims 1 to 3, **characterized in**
**that** the intermediate storage (1) comprises signal transmitters and/or signal receivers (50, 51) for detecting level differences between the support plate (26) to be loaded or unloaded and the transfer edge (K) of the infeed or outfeed conveyor (25 and 28, 32, respectively), wherein the signal transmitters and/or signal receivers (50, 51) are preferably implemented as Hall sensors and/or magnetoresistive sensors and/or light barriers in the region of the infeed or outfeed plane (25, 28).

5. A method for preventing the collision of gondolas of an intermediate storage (1) according to any one of the claims 1 to 4, wherein the gondolas are successively transported into a vertical conveyor of the intermediate storage (1), **characterized in**
**that** by means of a deflection organ (41) of a deflection device (40) of the intermediate storage, an engagement with a shift profile (42) of the gondola (60) takes place, wherein the gondola (60) is rotatably mounted on towing arms of the chains and the deflection organs (41),
**that** the deflection organ (41) is preferably horizontally moved along a push rod (43) of the deflection device (40), wherein the gondola (60) is put into an oblique position,
**that** the gondola (60) is guided a distance (W) along the push rod (43) by means of the deflection organ (41) in such a manner that the gondola (60) is guided past the following gondola (61) without colliding,
**that** after covering said distance (W), the deflection organ (41) is disengaged from the shift profile (42) and is moved back in order to be inserted into the shift profile (42) of the following gondola (61).

## Revendications

1. Magasin intermédiaire (1) destiné au stockage de marchandises de détail (27) avec une station d'entrée (2) et une station de sortie (3), lesquelles sont actionnables indépendamment l'une de l'autre, avec un parcours de stockage (31) à capacité de réception variable, disposé entre la station d'entrée (2) et la station de sortie (3), avec des plaques de support (26) destinées à recevoir les marchandises de détail (27), les plaques de support (26) qui forment une pile étant regroupées sur des gondoles (22), et avec un dispositif de transport pour transporter les plaques de support dans un déplacement circulaire à travers le magasin intermédiaire (1), avec un élévateur d'entrée prévu dans la zone de la station d'entrée (2) et un élévateur de sortie prévu dans la zone de la station de sortie pour former ou défaire la pile amassée dans les parcours de stockage (31a, 31b), avec des convoyeurs verticaux (4, 5) prévus pour le poste d'entrée ainsi que pour le poste de sortie, qui comprennent chacun une paire de chaînes dotée d'éléments d'entraînement (23, 24) pour les gondoles (22), chaque convoyeur vertical (4, 5) étant disposé autour de roues de renvoi fixes (8a, 9a, 8b, 9b ; 10a, 11a, 10b, 11b), **caractérisé par le fait que** le magasin intermédiaire (1) comprend un dispositif de déviation (40) avec un entraînement (46) et avec une tige coulissante (43), un chariot (44) monté mobile en entraînement étant disposé sur la tige coulissante (43) et qu'à une extrémité de la tige coulissante (43), un organe de déviation (41) est monté mobile, lequel est défini de façon à entrer en prise, si nécessaire, dans un profil de commutation (42) disposé sur une région extérieure de la gondole (22), afin de faire passer la gondole (22) en position inclinée en vue d'éviter une collision avec la gondole suivante.

2. Magasin intermédiaire (1) selon la revendication 1, **caractérisé par le fait**
**que** la tige coulissante (43) est réalisée sous la forme d'un entraînement linéaire à un axe, l'organe de déviation (41) étant apte à être guidé le long de la course de levée de l'entraînement linéaire.

3. Magasin intermédiaire (1) selon l'une des revendications 1 et 2, **caractérisé par le fait que** chaque paire de chaînes (16a, 16b, 17a, 17b) des deux convoyeurs verticaux (4, 5) comprend deux chaînes parallèles, et chaque chaîne individuelle (16, 16, 17a, 17b) comprend un entraînement (20a, 20b, 21a, 21b) séparé, mécaniquement indépendant,
que le mouvement de transport des chaînes coopérant chacune à l'intérieur d'une paire de chaînes est réglé de façon synchrone et
que le magasin intermédiaire (1) comprend un dispositif de réglage pour déterminer les différences de niveau entre les plaques de support (26) à charger ou à décharger et les bords de décharge du convoyeur d'amenée ou de décharge (25, 32) et pour le réglage correspondant des entraînements (20a, 20b, 21a, 21b) des chaînes individuelles (16a, 16b, 17a, 17b).

4. Magasin intermédiaire (1) selon l'une des revendications 1 à 3, **caractérisé par le fait que** le magasin intermédiaire (1) comprend un émetteur de signaux et/ou un récepteur de signaux (50, 51) pour déterminer les différences de niveau entre les plaques de support (26) à charger ou à décharger et les bords de décharge (K) du convoyeur d'amenée ou de décharge (25 ou 28, 32), l'émetteur de signaux et/ou le récepteur de signaux (50, 51) étant réalisés de préférence sous la forme de capteurs à effet Hall et/ou de capteurs magnétorésistifs et/ou de barrières lumineuses dans la zone du plan d'amenée ou de décharge (25, 28).

5. Procédé d'évitement de collision de gondoles d'un magasin intermédiaire (1) tel que défini à l'une des revendications 1 à 4, les gondoles étant transportées l'une derrière l'autre dans un convoyeur vertical du magasin intermédiaire (1), **caractérisé par le fait**
**qu'**au moyen d'un organe de déviation (41), un dispositif de déviation (40) du magasin intermédiaire entre en prise dans un profil de commutation (42) de la gondole (60), la gondole (60) étant montée pivotante sur des éléments d'entraînement des chaînes et sur les organes de déviation (41),
**que** l'organe de déviation (41) est déplacé de préférence horizontalement le long d'une tige coulissante (43) du dispositif de déviation (40), la gondole (60) passant dans une position inclinée,
**que** la gondole (60) est guidée au moyen de l'organe de déviation (41) sur un parcours (W) le long de la tige coulissante (43) de telle sorte que la gondole (60) passe sans collision devant la gondole suivante (61),
**qu'**après l'accomplissement dudit parcours (W), l'organe de déviation (41) est enlevé du profil de commutation (42) et reculé, afin d'être introduit dans le profil de commutation (42) de la gondole suivante (61).
